(19) Europäisches Patentamt / European Patent Office / Office européen des brevets

(11) **EP 2 714 256 B1**

(12) **FASCICULE DE BREVET EUROPEEN**

(45) Date de publication et mention
de la délivrance du brevet:
**09.09.2015 Bulletin 2015/37**

(51) Int Cl.:
***B01F 13/00*** *(2006.01)*     ***B01F 3/04*** *(2006.01)*
***C02F 3/12*** *(2006.01)*     ***C02F 3/16*** *(2006.01)*

(21) Numéro de dépôt: **12728717.5**

(22) Date de dépôt: **16.05.2012**

(86) Numéro de dépôt international:
**PCT/FR2012/051114**

(87) Numéro de publication internationale:
**WO 2012/160300 (29.11.2012 Gazette 2012/48)**

(54) **EQUIPEMENT POUR L'INJECTION D'UN GAZ DANS UN BASSIN D'ÉPURATION**

VORRICHTUNG ZUR EINSPRITZUNG EINES GASES IN EINE SENKGRUBE

EQUIPMENT FOR INJECTING A GAS INTO A CESSPOOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.05.2011 FR 1154543**

(43) Date de publication de la demande:
**09.04.2014 Bulletin 2014/15**

(73) Titulaires:
• **L'Air Liquide Société Anonyme pour l'Etude et
l'Exploitation des Procédés Georges Claude
75007 Paris (FR)**
• **Milton Roy Mixing
77212 Avon Cedex (FR)**

(72) Inventeurs:
• **BEAUDOUIN, Guillaume
F-78190 Trappes (FR)**
• **BRIEND, Robert
F-78340 Clayes Sous Bois (FR)**

• **BUTZ, Ulrich
41812 Erkelenz (DE)**
• **CAMPO, Philippe
F-78180 Montigny Le Bretonneux (FR)**
• **SAVREUX, Frédéric
F-77212 Avon Cedex (FR)**
• **MARET, David
F-77212 Avon Cedex (FR)**
• **COGNART, Patrice
F-77212 Avon Cedex (FR)**

(74) Mandataire: **Mellul-Bendelac, Sylvie Lisette
L'Air Liquide
Service Propriété Industrielle
75, Quai d'Orsay
75321 Paris Cedex 07 (FR)**

(56) Documents cités:
**DE-U1- 9 015 105    FR-A1- 2 784 311
US-A- 3 775 307    US-A- 5 198 156**

**Description**

La présente invention concerne le domaine des équipements permettant l'injection d'un gaz dans des effluents liquides ou encore des eaux usées. Elle s'intéresse notamment aux procédés d'aération de bassins biologiques à boues activées par l'injection d'un gaz riche en oxygène ou encore de mélanges comportant du $CO_2$.

Un des objectifs de la présente invention est de proposer un nouvel appareil, flottant, permettant d'optimiser la consommation énergétique du dispositif, tout en éliminant les contraintes des équipements actuels.

On rappellera que les traitements biologiques aérobie d'effluents consistent généralement à mettre en contact ces effluents avec une biomasse (micro-organismes) qui dégrade la pollution contenue dans ceux-ci en transformant les molécules organiques. Il est ainsi connu d'injecter un gaz généralement oxygéné dans les effluents contenus dans un bassin, de manière à alimenter la biomasse. Dans ce but, de nombreux dispositifs d'injection de gaz dans les effluents sont proposés sur ce marché. La plupart de ces systèmes sont soit immergés, soit flottants.

Ils assurent généralement également l'agitation des effluents, l'injection du gaz oxygéné combinée à l'agitation permettant une meilleure dissolution du gaz oxygéné dans l'effluent. Cette dissolution est mesurée par la capacité de transfert du dispositif. Pour la plupart de ces dispositifs d'agitation et d'injection du gaz dans le liquide, une partie du transfert du gaz dans le liquide est réalisée par un moyen de mélange gaz/liquide, tel qu'un venturi ou une turbine, formant une émulsion du gaz dans le liquide et le reste du transfert est obtenu lors de la dispersion de l'émulsion dans le liquide.

Il a été observé que la plupart de ces dispositifs d'agitation et d'injection présentaient une limite de capacité d'injection : passé un certain débit d'injection de gaz, le dispositif s'engorge, car, au niveau du moyen d'injection du gaz dans le liquide, le volume de gaz devient trop important par rapport au volume de liquide. Alors qu'il serait possible de transférer et dissoudre plus de gaz dans le liquide contenu dans le bassin de traitement, le dispositif ne peut apporter toute la quantité de gaz nécessaire.

Les systèmes flottants permettant l'aération par injection d'un gaz riche en oxygène utilisent des technologies assez complexes entraînant des contraintes de fabrication et d'utilisation coûteuses et limitant par conséquent leurs utilisations.

A titre illustratif, on peut citer le document EP-995 485 A1, qui décrit un équipement flottant qui permet un transfert d'un gaz riche en oxygène dans un bassin avec une efficacité de transfert très élevée. Mais pour cela, il utilise une technologie complexe faisant appel à une turbine permettant de créer une émulsion gaz/liquide, complétée par des systèmes permettant de diriger cette émulsion vers une hélice conçue pour disperser cette émulsion dans le bassin.

L'association de tels éléments, turbine, systèmes permettant de diriger l'émulsion gaz/liquide, et hélice de dispersion, a principalement pour conséquences les aspects suivants :

- Une consommation énergétique importante, la turbine consommant approximativement 40% de l'énergie totale consommée par l'appareil ;
- Un poids de l'équipement élevé, impliquant un coût matière important, et des contraintes sur le choix des flotteurs.
- Des contraintes de fabrication et d'assemblage ayant pour conséquence un coût élevé de l'appareil lors de sa fabrication et sa maintenance.
- Une limite de débit gazeux pouvant être injecté par l'équipement, on l'a dit plus haut, due en particulier à l'utilisation d'une turbine et des systèmes permettant de diriger l'émulsion gaz/liquide générée par la turbine.

Un des objectifs de la présente invention est alors de proposer un équipement flottant permettant l'injection d'un gaz riche en oxygène et ayant une efficacité de transfert du gaz équivalente aux dispositifs antérieurs, en limitant ou éliminant les inconvénients techniques de ces dispositifs antérieurs.

Pour atteindre cet objectif, il est proposé ici de supprimer la turbine, suppression qui vise à atteindre les objectifs suivants :

- une réduction d'environ 30% de l'énergie consommée ;
- l'élimination des principaux éléments de guidage des flux générés par la turbine ;
- le report de la limite d'engorgement de l'appareil de plus de 50% ;
- une réduction d'environ 25 % du poids de l'équipement ;
- une simplification importante de la fabrication, des assemblages et de la maintenance ;
- une réduction des coûts de fabrication et d'entretien ;
- l'augmentation du champ d'action de l'équipement à puissance consommée équivalente.

Néanmoins, la suppression de la turbine pourrait apparaître négative à l'homme du métier puisque cette suppression a pour conséquence d'éliminer des fonctions recherchées telles la génération de fines bulles (de taille typiquement comprise entre 0,8 et 2,5 mm) ou encore le taux de transfert d'une partie du gaz.

Comme on le verra plus en détails dans ce suit, le nouvel équipement proposé selon la présente invention a été conçu pour remplacer ou compenser ces fonctions élémentaires, et associe pour cela les éléments suivants :

- un dispositif d'entraînement, destiné à être disposé au dessus du liquide, pourvu d'un arbre de sortie vertical, équipé à son extrémité d'une hélice, hélice immergée dans le liquide, l'hélice étant préférentiellement caractérisée comme on va le voir par un taux de recouvrement élevé ;

-	un dispositif que l'on peut qualifier de réacteur de « pré-mélange », comprenant un dispositif d'injection (par exemple un tore d'injection), positionné au dessus ou en dessous d'un mobile à pales inclinées ;
-	l'hélice est située à l'extrémité de l'arbre, sous le réacteur de pré-mélange.

On entend par « taux de recouvrement » de l'hélice le rapport de la surface couverte par les pales et de la surface du cercle dans lequel l'hélice est inscrite.

Comme on l'a vu ci-dessus, l'équipement comporte un dispositif d'injection, qui est préférentiellement un tore muni d'un nombre d'orifices prévu pour une diffusion régulière du gaz positionné dans un cercle inscrit dans le diamètre de l'hélice. Les études réalisées par les Demanderesses ont en effet démontré les performances avantageuses du tore d'injection, pour atteindre une diffusion homogène du gaz, mais aussi réduire les phénomènes éventuels de colmatage, favoriser une installation aisée et une maintenance réduite. Les orifices du tore sont préférentiellement dirigés vers le bas pour éviter un colmatage éventuel.

Si le tore est préféré selon l'invention il est également envisageable, sans sortir du cadre de l'invention, d'utiliser d'autres dispositifs d'injection tels que des éléments poreux de formes différentes (plaques, bougies ou encore des plaques micro-percées....).

La réalisation des fonctions élémentaires du réacteur est obtenue par l'association d'un diffuseur et d'un mobile à pales inclinées, judicieusement positionnés par rapport aux autres éléments de l'équipement et notamment l'hélice de dispersion. L'hydraulique générée par cette association et ce positionnement conduisent à un écoulement optimisé dans le réacteur. Le couple « diffuseur et mobile à pales inclinées» assure la fonction de réacteur de pré-mélange indispensable à la réalisation des performances désirées, le choix, l'association et le positionnement des différents éléments constituant l'équipement global assurent d'une part la réalisation du pré-mélange et d'autre part sa dispersion dans le bassin, permettant d'obtenir un transfert optimal dans le bassin.

L'arrangement proposé par l'invention permet que le pré-mélange issu du pré-mélangeur soit diffusé dans une zone où le champ de vitesse du liquide est optimal du point de vue de son intensité et sa direction, afin de propulser les bulles le plus loin possible et d'éviter le phénomène de coalescence.

L'homme du métier pourrait également s'étonner de la présence dans l'équipement objet de la présente invention d'un mobile à pales inclinées.

En général un mobile à pales inclinées n'est pas utilisé dans la dispersion de gaz dans des liquides.

Et pourtant, dans le cas de l'invention, cette utilisation est possible et favorable du fait de l'utilisation d'une hélice avec un taux de recouvrement important et du positionnement de ce mobile au sein des différents composants.

Ainsi il a pu être démontré que le mobile à pales inclinées génère :

-	Un écoulement axial et radial favorisant l'homogénéité du mélange réactionnel.
-	Des bulles de gaz de faibles tailles (du fait d'un fort coefficient de cisaillement du mobile)
-	De faibles perturbations sur l'écoulement hydraulique de l'équipement, écoulement principalement réalisé par l'hélice.

Le mobile à pales inclinées se caractérise également par une consommation énergétique réduite par rapport aux mobiles classiquement utilisés pour cette fonction.

En résumé, on trouvait dans ce domaine technique uniquement des mobiles à pales droites, ne réalisant qu'un écoulement purement radial, créant ainsi une résistance plus importante, d'où une consommation énergétique plus élevée.

La présente invention concerne alors un équipement flottant, d'injection d'un gaz dans des effluents liquides ou des eaux usées, et plus particulièrement d'un gaz riche en oxygène dans un bassin depuis la surface, comprenant les éléments suivants :

-	un dispositif d'entraînement, destiné à être disposé au dessus du liquide, pourvu d'un arbre de sortie vertical, équipé à son extrémité d'une hélice, hélice immergée dans le liquide,
-	un dispositif de pré-mélange, comprenant un dispositif d'injection (par exemple un tore d'injection), positionné au dessus ou en dessous d'un mobile à pales inclinées, l'hélice étant située à l'extrémité de l'arbre, sous le réacteur de pré-mélange.

L'invention pourra par ailleurs adopter l'une ou plusieurs des caractéristiques suivantes :

-	l'hélice possède un nombre de débit de pompage propre $N_{Qp}$ qui est compris entre 0,3 et 1, où :

$$Q_p = N_{Qp} \text{ x } N \text{ x } D^3 \text{ ;}$$

où $Q_p$ est le débit de pompage de l'hélice, $N$ la vitesse de rotation de l'hélice, et $D$ le diamètre de l'hélice.
-	le dispositif d'injection est un tore, muni d'orifices d'injection, et positionné dans un cercle inscrit dans le diamètre de l'hélice, le tore étant positionné à une distance comprise entre 0.01 et 1.5 fois le diamètre de l'hélice au dessus de l'hélice, de manière avantageuse entre 0.03 et 0.3 fois le diamètre de l'hélice, au dessus de l'hélice.

- le dispositif d'injection est un tore, muni d'orifices d'injection, le tore ayant un diamètre compris entre 20 et 200% le diamètre de l'hélice, de manière avantageuse de 30 à 120% le diamètre de l'hélice.
- le dispositif d'injection est un tore, muni d'orifices d'injection, l'espace interne au tore étant compartimenté en au moins deux zones isolées l'une de l'autre, aptes à être alimentées en des gaz différents.

A titre illustratif on peut alimenter l'une des zones du tore en oxygène et l'autre ou une autre des zones en un mélange $O_2/O_3$. Une telle possibilité de gaz différents ($O2 / O2 + 03$, $02 / Air$, $02$ ou air / $CO2$ etc...) ou d'alimentation à l'aide de gaz de qualité différente est tout particulièrement avantageuse pour certaines applications. Ainsi à titre illustratif on peut envisager l'injection d'air et d'oxygène de façon simultanée ou alternative en éliminant tout risque de sécurité par l'utilisation de réseaux totalement séparés (pas de risque de contamination de la ligne oxygène par de l'air de mauvaise qualité, pas de risque de retour d'oxygène vers les compresseurs air etc....).

On peut également envisager d'utiliser le même équipement pour l'injection de $CO_2$ dans le cadre d'une régulation de pH et dans le même temps ou de façon alternative d'injecter un gaz comprenant de l'oxygène pour réaliser une aération.

Dans le cadre de gaz à différents débits / pressions on élimine les problèmes de régulation de pression et de débit l'un par rapport à l'autre :

- en variante, le dispositif d'injection est constitué de deux demi-tores, chaque demi-tore étant apte à être alimenté en des gaz différents comme déjà décrit ci-dessus.
- le dispositif d'injection est constitué d'un assemblement d'éléments poreux de type bougies poreuses, ou plaques poreuses, ou encore plaques percées, préférentiellement au nombre de 3 et situés dans un volume décrit par un cylindre vertical centré sur l'axe vertical de l'hélice, cylindre vertical de diamètre extérieur préférentiellement égal à au moins 3 fois le diamètre de l'hélice et de hauteur préférentiellement égale à au moins trois fois le diamètre de l'hélice.
- la distance entre la face inférieure du flotteur et le bord d'attaque supérieur de l'hélice est comprise entre 0,5 fois et 1.5 fois le diamètre de l'hélice, de manière préférée entre 0.8 et 1 fois le diamètre de l'hélice.
- la distance entre le tore d'injection et le mobile à pales inclinées est comprise entre 1 et 20% du diamètre du mobile, par exemple voisine de 2,5 % du diamètre mobile.
- le mobile à pales inclinées comporte de 2 à 1 2 pales, préférentiellement de 4 à 8 pales, et préférentiellement un nombre pair de fois le nombre de pales de l'hélice située à l'extrémité de l'arbre.
- le mobile à pales inclinées est positionné au dessous de l'injecteur, à une distance comprise entre 5 mm et 100 mm.
- le gaz injecté est un gaz dont la teneur en oxygène est comprise entre 25 et 100%, ou un gaz ozoné, ou un gaz comportant du dioxyde de carbone dont la teneur en $CO_2$ est comprise entre 5 et 100%, ou un gaz comprenant de 80 à 100% d'azote.

D'autres caractéristiques et avantages de l'invention ressortiront de la description suivante d'exemples de modes de réalisation, donnée à titre d'exemple non limitatif, en regard des dessins annexés où :

- la figure 1 est une vue schématique partielle en coupe illustrant un exemple de réalisation de l'équipement de l'invention utilisant un moyen d'injection de type torique;
- la figure 2 illustre un mode de réalisation d'un mobile à pales inclinées selon l'invention, comportant 6 pales ;
- la figure 3 est une vue de détail d'un des modes de réalisation de l'invention comportant des plaques anti-vibrations.

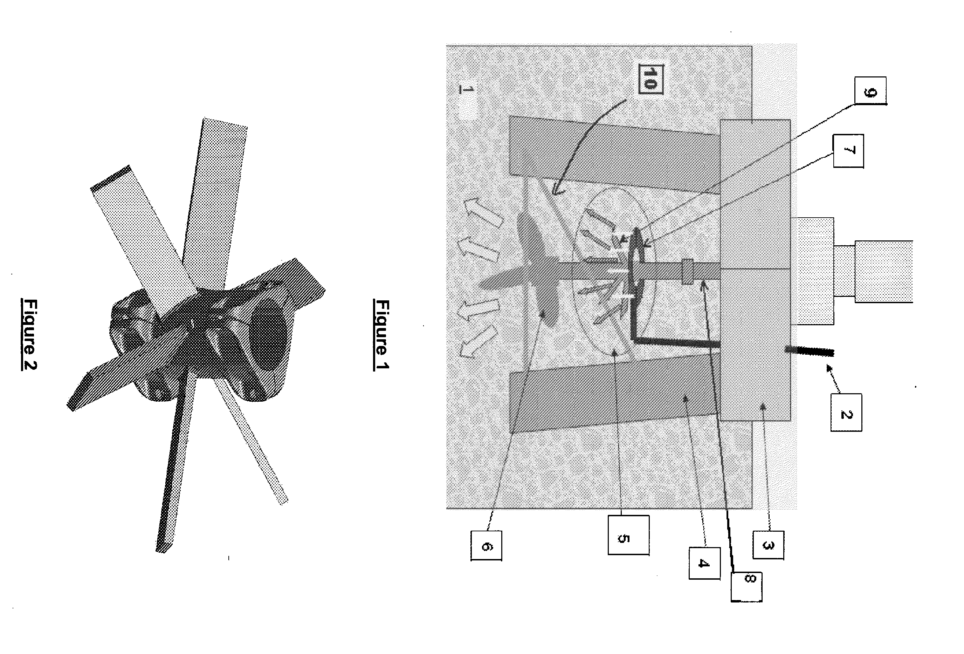

On reconnait sur la figure 1 la présence, dans l'équipement flottant, d'injection d'un gaz dans un bassin 1 d'effluents liquides ou d'eaux usées, conforme à l'invention :

- d'un dispositif d'entraînement, destiné à être disposé au dessus du liquide 1, pourvu d'un arbre 8 de sortie vertical, équipé à son extrémité d'une hélice 6, hélice immergée dans le liquide ;
- l'équipement est flottant grâce à la présence d'un ou de plusieurs flotteurs 3 ;
- un dispositif de pré-mélange 5, comprenant un dispositif d'injection torique 7 (alimenté par l'arrivée de gaz 2), positionné au dessus d'un mobile 9 à pales inclinées, l'hélice étant située à l'extrémité de l'arbre, sous le réacteur de pré-mélange. Le mode de réalisation représenté ici illustre le cas d'un tore 7 dont l'espace interne est continu, non compartimenté, et alimenté en gaz via l'arrivée unique 2, mais l'homme du métier comprend que dans le cas d'un tore compartimenté, dont l'espace interne est compartimenté en au moins deux zones isolées l'une de l'autre, et aptes à être alimentées en des gaz différents, on prévoira deux ou plusieurs arrivées de gaz 2 sur le tore.
- dans le mode de réalisation représenté, le nombre de pales de l'hélice est de 3, et le nombre de pales du mobile est de 6 ;
- un système 4 de contre-pales (ici pour le mode de réalisation représenté le dispositif comprend 3 contre-pales), permettant d'une part la délimitation de la zone de pré-mélange mais également d'éviter la formation de vortex et l'entraînement en rotation de l'équipement (l'équipement tournerait alors comme une toupie). Ce système de contre-pales permet de plus d'orienter le flux axial.

La figure 1 n'est qu'une représentation schématique partielle de l'équipement dont on n'a pas représenté tous les détails secondaires ou optionnels pour des raisons de lisibilité des éléments essentiels qu'apporte l'invention, et ainsi notamment on n'a pas représenté l'ensemble du châssis métallique dont sont traditionnellement solidaires les éléments constitutifs de tels équipement d'injection, et par exemple ici les flotteurs, le tore ou encore les contre-pales. Et l'on distingue ainsi sur la figure 1 deux barres de rigidification 10 reliant deux des contre-pales 4, barres formant partie d'un tel châssis.

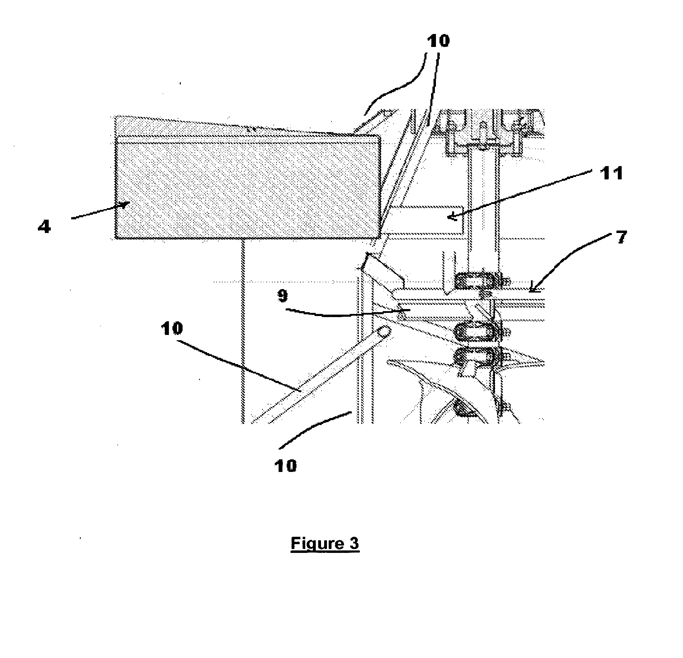

La figure 3 illustre par ailleurs dans une vue de détail un des modes avantageux de mise en oeuvre de l'invention, qui peut se révéler dans certaines configurations très intéressant, et notamment limiter les vibrations du dispositif. Dans ce mode avantageux, le dispositif comprend des plaques 11 de forme parallélépipédique ou trapézoïdale, ici au nombre de trois (une plaque par contre-pale), plaques fixées en une de leur extrémité sur le châssis 10, par exemple sur une des contre-pales 4 (elles même formant partie d'un tel châssis), plaques dirigées vers l'axe d'entrainement de l'hélice, et d'autre part situées sous le niveau de flottaison.

Sans être aucunement liées par les explications techniques suivantes, les Demanderesses sont amenées à penser qu'une telle configuration canalise partiellement le flux liquide aspiré par l'hélice et peut contribuer à diminuer les éventuelles vibrations du système.

Un équipement tel que celui décrit dans le cadre des figures 1 et 2 a été utilisé pour l'injection d'oxygène dans un bassin biologique traitant des effluents provenant d'une papeterie.

Pour un besoin d'oxygène évalué à 53,3 Kg/h, un débit d'oxygène de 45 m$^3$/h a été injecté dans le bassin. L'efficacité de transfert calculée a été évaluée à une valeur voisine de 91,3% ce qui représente une excellente performance.

On a donc ainsi montré que la simplification de l'équipement n'a pas dégradé les performances obtenues, au contraire.

## Revendications

1. Equipement flottant, d'injection d'un gaz dans des effluents liquides ou des eaux usées, et plus particulièrement d'un gaz riche en oxygène dans un bassin depuis la surface, comprenant les éléments suivants :

   - un dispositif d'entraînement, destiné à être disposé au dessus du liquide, pourvu d'un arbre (8) de sortie vertical, équipé à son extrémité d'une hélice (6), hélice immergée dans le liquide,

   - un dispositif de pré-mélange (5), comprenant un dispositif d'injection (7), positionné au dessus ou en dessous d'un mobile (9) à pales inclinées, l'hélice étant située à l'extrémité de l'arbre, sous le réacteur de pré-mélange.

2. Equipement selon la revendication 1, **caractérisé en ce que** l'hélice possède un nombre de débit de pompage propre $N_{Qp}$ qui est compris entre 0,3 et 1, où :

$$Q_p = N_{Qp} \times N \times D^3 \ ;$$

où $Q_p$ est le débit de pompage de l'hélice, $N$ la vitesse de rotation de l'hélice, et $D$ le diamètre de l'hélice.

3. Equipement selon la revendication 1 ou 2, **caractérisé en ce que** le dispositif d'injection est de forme torique.

4. Equipement selon la revendication 3, **caractérisé en ce que** le dispositif d'injection est un tore, muni d'orifices d'injection, et positionné dans un cercle inscrit dans le diamètre de l'hélice, le tore étant positionné à une distance comprise entre 0.01 et 1.5 fois le diamètre de l'hélice au dessus de l'hélice, préférentiellement à une distance comprise entre 0.03 et 0.3 fois le diamètre de l'hélice, au dessus de l'hélice.

5. Equipement selon la revendication 3, **caractérisé en ce que** le dispositif d'injection est un tore, muni d'orifices d'injection, le tore ayant un diamètre compris entre 20 et 200% le diamètre de l'hélice, préférentiellement compris entre 30 et 120% le diamètre de l'hélice.

6. Equipement selon la revendication 3, **caractérisé en ce que** le dispositif d'injection est un tore, muni d'orifices d'injection, l'espace interne au tore étant compartimenté en au moins deux zones isolées l'une de l'autre, aptes à être alimentées en des gaz différents.

7. Equipement selon l'une des revendications 3 à 6, **caractérisé en ce que** la distance entre le tore d'injection et le mobile à pales inclinées est comprise entre 1 et 20% du diamètre du mobile, préférentiellement voisine de 2,5 % du diamètre du mobile.

8. Equipement selon la revendication 1, **caractérisé en ce que** le dispositif d'injection est constitué d'un assemblement d'éléments poreux de type bougies poreuses, ou plaques poreuses, ou encore plaques percées, préférentiellement au nombre de 3 et situés dans un volume décrit par un cylindre vertical centré sur l'axe vertical de l'hélice, cylindre vertical de diamètre extérieur préférentiellement égal à au moins 3 fois le diamètre de l'hélice et de hauteur préférentiellement égale à au moins trois fois le diamètre de l'hélice.

9. Equipement selon l'une des revendications précédentes, **caractérisé en ce que** l'équipement est flottant grâce à la présence d'un ou plusieurs flotteurs (3) ; et **en ce que** la distance entre la face inférieure du flotteur et le bord d'attaque supérieur de l'hélice est comprise entre 0,5 fois et 1.5 fois le diamètre de l'hélice, de manière préférée entre 0.8 et 1 fois le diamètre de l'hélice.

10. Equipement selon l'une des revendications précédentes, **caractérisé en ce que** le mobile à pales inclinées comporte de 2 à 12 pales, préférentiellement de 4 à 8 pales, et préférentiellement un nombre pair de fois le nombre de pales de l'hélice située à l'extrémité de l'arbre.

11. Equipement selon l'une des revendications précédentes, **caractérisé en ce que** le mobile à pales inclinées est positionné au dessous du dispositif d'injection, à une distance comprise entre 5 mm et 100 mm de ce dispositif d'injection.

12. Equipement selon l'une des revendications précédentes, **caractérisé en ce qu'**il comprend un ensemble d'au moins deux plaques (11) de forme sensiblement parallélépipédique ou trapézoïdale, situées sous le niveau de flottaison, plaques fixées en une de leur extrémité sur un châssis dont sont solidaires tout ou partie des éléments constitutifs de l'équipement d'injection et notamment le dispositif d'injection (7) ainsi que des éléments de flottaison permettant à l'équipement d'être flottant, les plaques étant dirigées vers l'axe d'entrainement de l'hélice.

**Patentansprüche**

1. Schwimmfähige Einrichtung, zum Einblasen eines Gases in flüssige Stoffe oder Abwässer, und insbesondere eines an Sauerstoff reichen Gases in ein Becken von der Oberfläche aus, umfassend die folgenden Elemente:

   - eine Antriebsvorrichtung, die zur Anordnung oberhalb der Flüssigkeit vorgesehen ist und mit einer Welle (8) mit vertikalem Abtrieb versehen ist, die an ihrem Ende mit einem Propeller (6) versehen ist, wobei der Propeller in die Flüssigkeit eingetaucht ist,
   - eine Vormischvorrichtung (5), die eine Einblasvorrichtung (7) umfasst, die oberhalb oder unterhalb eines beweglichen Elements (9) mit geneigten Schaufeln angeordnet ist, wobei sich der Propeller am Ende der Welle unter dem Vormischreaktor befindet.

2. Einrichtung nach Anspruch 1, **dadurch gekennzeichnet, dass** der Propeller eine Eigenpumpleistung $N_{Qp}$ besitzt, die zwischen 0,3 und 1 beträgt, wobei:

$$Q_p = N_{Qp} \times N \times D^3,$$

wobei $Q_p$ die Pumpleistung des Propellers, $N$ die Drehzahl des Propellers und $D$ der Durchmesser des Propellers ist.

3. Einrichtung nach Anspruch 1 oder 2, **dadurch gekennzeichnet, dass** die Einblasvorrichtung eine torische Form hat.

4. Einrichtung nach Anspruch 3, **dadurch gekennzeichnet, dass** die Einblasvorrichtung ein Torus ist, der mit Einblasöffnungen versehen ist und in einem Kreis angeordnet ist, der sich in den Durchmesser des Propellers einpasst, wobei der Torus in einem Abstand, der zwischen dem 0,01- und 1,5-Fachen des Durchmessers des Propellers beträgt, oberhalb des Propellers, bevorzugt in einem Abstand, der zwischen dem 0,03- und 0,3-Fachen des Durchmessers des Propellers beträgt, oberhalb des Propellers angeordnet ist.

5. Einrichtung nach Anspruch 3, **dadurch gekennzeichnet, dass** die Einblasvorrichtung ein Torus ist, der mit Einblasöffnungen versehen ist, wobei der Torus einen Durchmesser hat, der zwischen 20 und 200 % des Durchmessers des Propellers beträgt, bevorzugt zwischen 30 und 120 % des Durchmessers des Propellers beträgt.

6. Einrichtung nach Anspruch 3, **dadurch gekennzeichnet, dass** die Einblasvorrichtung ein Torus ist, der mit Einblasöffnungen versehen ist, wobei der Innenraum des Torus in wenigstens zwei voneinander isolierte Zonen unterteilt ist, die dazu eingerichtet sind, mit unterschiedlichen Gasen gespeist zu werden.

7. Einrichtung nach einem der Ansprüche 3 bis 6, **dadurch gekennzeichnet, dass** der Abstand zwischen dem Einblastorus und dem beweglichen Element mit geneigten Schaufeln zwischen 1 und 20 % des Durchmessers des beweglichen Elements, bevorzugt nahe 2,5 % des Durchmessers des beweglichen Elements, beträgt.

**8.** Einrichtung nach Anspruch 1, **dadurch gekennzeichnet, dass** die Einblasvorrichtung gebildet ist von einer Anordnung von porösen Elementen des Typs poröse Kerzen oder poröse Platten oder auch mit Löchern versehene Platten, bevorzugt in der Anzahl von 3, die in einem Raum befindlich sind, der von einem auf der vertikalen Achse des Propellers zentrierten vertikalen Zylinder beschrieben wird, wobei der vertikale Zylinder einen Außendurchmesser hat, der bevorzugt wenigstens dem 3-Fachen des Durchmessers des Propellers gleich ist und eine Höhe hat, die bevorzugt wenigstens dem Dreifachen des Durchmessers des Propellers gleich ist.

**9.** Einrichtung nach einem der vorhergehenden Ansprüche, **dadurch gekennzeichnet, dass** die Einrichtung aufgrund des Vorhandenseins eines oder mehrerer Schwimmer (3) schwimmfähig ist; und dass der Abstand zwischen der unteren Fläche des Schwimmers und der oberen Vorderkante des Propellers zwischen dem 0,5-Fachen und dem 1,5-Fachen des Durchmessers des Propellers, vorzugsweise zwischen dem 0,8- und 1-Fachen des Durchmessers des Propellers, beträgt.

**10.** Einrichtung nach einem der vorhergehenden Ansprüche, **dadurch gekennzeichnet, dass** das bewegliche Element mit geneigten Schaufeln 2 bis 12 Schaufeln, bevorzugt 4 bis 8 Schaufeln und bevorzugt ein gerades Vielfaches der Schaufelanzahl des Propellers, der sich am Ende der Welle befindet, aufweist.

**11.** Einrichtung nach einem der vorhergehenden Ansprüche, **dadurch gekennzeichnet, dass** das bewegliche Element mit geneigten Schaufeln unterhalb der Einblasvorrichtung in einem Abstand angeordnet ist, der zwischen 5 mm und 100 mm von dieser Einblasvorrichtung beträgt.

**12.** Einrichtung nach einem der vorhergehenden Ansprüche, **dadurch gekennzeichnet, dass** sie eine Anordnung von wenigstens zwei im Wesentlichen quader- oder trapezförmigen Platten (11) umfasst, die unter der Schwimmebene befindlich sind, wobei die Platten an einem ihrer Enden auf einem Rahmen befestigt sind, mit dem sämtliche oder ein Teil der Bestandteile der Einblasvorrichtung fest verbunden sind und insbesondere die Einblasvorrichtung (7) sowie schwimmfähige Elemente, die es der Einrichtung ermöglichen, schwimmfähig zu sein, wobei die Platten zu der Antriebsachse des Propellers hin gerichtet sind.

**Claims**

**1.** Floating equipment for injecting a gas into liquid effluents or sewage, and more particularly a gas which is rich in oxygen, into a tank from the surface, comprising the following elements:

- a drive device, which is intended to be arranged above the liquid, provided with a vertical output shaft (8) equipped at the end thereof with a propeller (6), which propeller is immersed in the liquid;
- a pre-mixing device (5), comprising an injection device (7) which is positioned above or below a mobile unit (9) having inclined blades, the propeller being situated at the end of the shaft, under the pre-mixing reactor.

**2.** Equipment according to claim 1, **characterised in that** the propeller has its own pumping rate number $N_{Qp}$ which is between 0.3 and 1, in which:

$$Q_p = N_{Qp} \times N \times D^3,$$

in which $Q_p$ is the pumping rate of the propeller, N is the speed of rotation of the propeller, and D is the diameter of the propeller.

**3.** Equipment according to either claim 1 or claim 2, **characterised in that** the injection device is toroidal in shape.

**4.** Equipment according to claim 3, **characterised in that** the injection device is a torus which is provided with injection orifices and is positioned in a circle inscribed in the diameter of the propeller, the torus being positioned at a distance of between 0.01 and 1.5 times the diameter of the propeller above the propeller, preferably at a distance of between 0.03 and 0.3 times the diameter of the propeller above the propeller.

**5.** Equipment according to claim 3, **characterised in that** the injection device is a torus which is provided with injection orifices, the torus having a diameter of between 20 and 200 % of the diameter of the propeller, and preferably of between 30 and 120 % of the diameter of the propeller.

**6.** Equipment according to claim 3, **characterised in that** the injection device is a torus which is provided with injection orifices, the space inside the torus being compartmentalised into at least two regions which are isolated from one another, and can be supplied with different gases.

**7.** Equipment according to any of claims 3 to 6, **characterised in that** the distance between the injection torus and the mobile unit having inclined blades is of between 1 and 20 % of the diameter of the mobile unit, and preferably approximately 2.5 % of the diameter of the mobile unit.

8. Equipment according to claim 1, **characterised in that** the injection device consists of an assembly of porous elements of the type such as porous plugs or porous plates, or also pierced plates, of which there are preferably three, and which are situated in a volume described by a vertical cylinder centred on the vertical axis of the propeller, which vertical cylinder has an outer diameter which is preferably equal to at least three times the diameter of the propeller, and a height which is preferably equal to at least three times the diameter of the propeller.

9. Equipment according to any of the preceding claims, **characterised in that** the equipment floats thanks to the presence of one or a plurality of floats (3), and **in that** the distance between the lower face of the float and the upper leading edge of the propeller is of between 0.5 times and 1.5 times the diameter of the propeller, and preferably between 0.8 and 1 times the diameter of the propeller.

10. Equipment according to any of the preceding claims, **characterised in that** the mobile unit having inclined blades comprises from 2 to 12 blades, and preferably from 4 to 8 blades, and preferably an even number of times the number of blades of the propeller which is situated at the end of the shaft.

11. Equipment according to any of the preceding claims, **characterised in that** the mobile unit having inclined blades is positioned below the injection device, at a distance of between 5 mm and 100 mm from said injection device.

12. Equipment according to any of the preceding claims, **characterised in that** it comprises a set of at least two plates (11) of a substantially parallelepiped or trapezoidal shape, situated under the floating level, which plates are secured at one of their ends to a frame to which some or all of the component elements of the injection equipment, and in particular the injection device (7), as well as floating elements which allow the equipment to float are rigidly connected, the plates facing towards the drive axis of the propeller.

**Figure 1**

**Figure 2**

**Figure 3**

**RÉFÉRENCES CITÉES DANS LA DESCRIPTION**

**Documents brevets cités dans la description**

- EP 995485 A1